**Europäisches Patentamt**

**European Patent Office**

**Office européen des brevets**

(19)

(11) Veröffentlichungsnummer: **0 343 546**
**A2**

(12) # EUROPÄISCHE PATENTANMELDUNG

(21) Anmeldenummer: **89109123.3**

(22) Anmeldetag: **20.05.89**

(51) Int. Cl.⁴: **B60R 19/24**

(30) Priorität: **26.05.88 DE 3817842**

(43) Veröffentlichungstag der Anmeldung:
**29.11.89 Patentblatt 89/48**

(84) Benannte Vertragsstaaten:
**DE ES FR GB IT**

(71) Anmelder: **AUDI AG**
**Auto-Union-Strasse 1 Postfach 220**
**D-8070 Ingolstadt(DE)**

(72) Erfinder: **Schulz, Norbert**
**Nobelstrasse 34**
**D-8070 Ingolstadt(DE)**

(74) Vertreter: **Engelhardt, Harald**
**Audi AG Postfach 2 20**
**D-8070 Ingolstadt(DE)**

(54) **Stossfängeranordnung an einem Kraftfahrzeug.**

(57) Die Erfindung betrifft eine Stoßfängeranordnung an einem Kraftfahrzeug. Der Stoßfänger (2) ist aus einem Stoßfängerträger (3), bevorzugt einem Aluminium-Strangpreßprofil, und einem Stoßfängerüberzug (4) aus festem Kunststoff hergestellt. Der Stoßfängerüberzug (3) ist im Querschnitt U-förmig ausgeführt und über den Stoßfängerträger (3) gesteckt. Erfindungsgemäß ist eine Schürze (15) mit einem zur Karosserieseite hin offenen Aufnahmemaul (19) vorgesehen, in das der Stoßfänger (2) eingesetzt ist. Am Stoßfängerüberzug (4) sind Haltenasen (8, 9) vorgesehen, die den Stoßfängerträger (3) umgreifen, wodurch Klippverbindungen geschaffen werden. Diese Klippverbindungen sind nach dem Einsetzen des Stoßfängers (2) in die Schürze (15) bzw. das Aufnahmemaul (19) gesichert, so daß mit wenigen Bauteilen und wenig Zeitaufwand bei der Montage eine kostengünstige, feste und dauerhafte Verbindung zwischen dem Stoßfängerträger (3) und dem Stoßfängerüberzug (4) geschaffen ist.

FIG.1

EP 0 343 546 A2

## Stoßfängeranordnung an einem Kraftfahrzeug

Die Erfindung betrifft eine Stoßfängeranordnung an einem Kraftfahrzeug nach dem Oberbegriff des Anspruchs 1.

Neuere Stoßfängerausführungen für Kraftfahrzeuge bestehen aus einem Aluminium-Strangpreßprofil als Stoßfängerträger, das an den äußeren Seitenbereichen über Stützen mit der Karosserie verbunden ist. Dieser Stoßfängerträger ist mit einem Stoßfängerüberzug aus festem Kunststoff an seiner, der Karosserie abgewandten Seite und Oberseite überzogen. Bei diesen Ausführungen ergeben sich eine Reihe von technischen Problemen:

Die Befestigung des Stoßfängerüberzugs am Stoßfängerträger muß dauerhaft und fest ausgeführt sein, damit bei einer Belastung des Stoßfängers der Stoßfängerüberzug nicht abfällt. Andererseits haben der Stoßfängerträger aus Aluminium und der Stoßfängerüberzug aus Kunststoff stark unterschiedliche Wärmeausdehnungskoeffizienten, so daß der Stoßfängerüberzug nicht flächig, z.B. durch Klebung, mit dem Stoßfängerträger verbunden werden kann. Bei festen, über die Länge des Stoßfängers verteilten Verbindungen würde sich der Stoßfängerüberzug bei einer Temperaturausdehnung unansehnlich werfen und verziehen. Im Stand der Technik sind daher relativ aufwendige Lösungen bekannt, den Stoßfängerträger und Stoßfängerüberzug mit Hilfe von Verschraubungen mit Schiebestücken in Langlöchern mit der Möglichkeit einer gegenseitigen Verschiebbarkeit zu verbinden.

Ein allgemeines Problem bei der Stoßfängeranordnung besteht darin, zwischen Karosserie und Stoßfänger einen Freiraum zur Verfügung zu stellen, der ausreichend groß ist, bei einer Belastung des Stoßfängers dessen Verschiebung ohne Beschädigung der Karosserie zuzulassen.

Dabei soll sich der Stoßfänger möglichst glattflächig in die Karosseriekontur einfügen, um einerseits eine strömungsgünstige Karosserie zu erhalten und andererseits gut aussehende, geschlossene Karosserieformen zu ermöglichen. Dies wird nach dem Stand der Technik durch Abdeckleisten mit meist aufwendigen Halterungen erreicht, die Schlitze und Freiräume für die Verschiebung der Stoßfänger abdecken.

Aufgrund der vorstehenden Probleme sind bekannte Stoßfängeranordnungen mit einem Stoßfängerträger und einem Stoßfängerüberzug meist aufwendig und teuer mit einer Vielzahl von Teilen aufgebaut, die zudem zu einem großen Montageaufwand führen.

Aufgabe der Erfindung ist es demgegenüber, bei einer Stoßfängeranordnung eine einfache, funktionsfähige und montagefreundliche Befestigung eines Stoßfängers zu schaffen.

Diese Aufgabe wird bei einer gattungsgemäßen Stoßfängeranordnung mit den kennzeichnenden Merkmalen des Anspruchs 1 gelöst.

Gemäß Anspruch 1 besteht der Stoßfänger aus einem Stoßfängerträger, der über Stützen mit der Karosserie verbunden ist und aus einem Stoßfängerüberzug aus festem Kunststoff, mit dem der Stoßfängerträger überzogen ist. Erfindungsgemäß ist zusätzlich eine Schürze, bevorzugt ebenfalls aus Kunststoff, vorgesehen, die mit der Karosserie verbunden ist. Diese Schürze ist mit einem zur Karosserieaußenseite hin geöffneten Aufnahmemaul ausgebildet. In die Schürze bzw. in das Aufnahmemaul ist der Stoßfänger eingesetzt. Die Maultiefe entspricht dabei wenigstens dem bei einer Belastung des Stoßfängers erforderlichen Freiraum, in den sich der Stoßfänger aufgrund seiner elastischen Durchbiegung und ggf. Verschiebung bei Verwendung von Pralldämpfern bewegen kann, ohne die Karosserie zu beschädigen.

Der Stoßfängerüberzug ist im Qerschnitt U-förmig ausgebildet und von der Karosserieaußenseite her gesehen auf den Stoßfängerträger aufgesteckt. Zur Halterung sind Haltenasen vorgesehen, die in vertikaler Richtung eingreifen und aufgrund der Elastizität des Stoßfängerüberzugs eine Klippverbindung bilden. Diese Klippverbindung kann den Stoßfängerüberzug am Stoßfängerträger halten, so daß beide Teile zu einer Einheit vormontiert werden können. Die Klippverbindung würde aber für sich gesehen nicht ausreichen, um bei einer Belastung des Stoßfängers einen festen Zusammenhalt zwischen Stoßfängerträger und Stoßfängerüberzug zu gewährleisten.

Es wird daher weiter vorgeschlagen, die Maulweite des Aufnahmemauls in der Schürze so eng auszuführen, daß mögliche Schlitze zwischen den Randbereichen des Aufnahmemauls und dem Stoßfängerüberzug schmäler als die Höhe der Haltenasen sind. Dadurch ist die Klippverbindung gegen ein Lösen gesichert, da die Schürzenränder die Klippverbindungen nach dem Einsetzen des vormontierten Stoßfängers in das Aufnahmemaul am Abheben und Aufgehen hindern.

Damit ist die erforderliche feste Verbindung zwischen Stoßfängerträger und Stoßfängerüberzug hergestellt. Bei entsprechend geformten Ausnehmungen oder Ansätzen für die Haltenasen ist zudem eine gegenseitige Verschiebung in Längsrichtung zum Ausgleich einer unterschiedlichen Wärmeausdehnung möglich. In der Schürze wird der erforderliche Freiraum für den Stoßfänger bei dessen Belastung geschaffen und zugleich ein glattflächiger Anschluß an die Karosserie hergestellt, so daß separate Abdeckleisten entfallen können.

Die erfindungsgemäße Stoßfängeranordnung besteht daher aus wenig Teilen, die einfach und mit wenig Zeitaufwand montier bar sind, so daß die Anordnung insgesamt kostengünstig ausführbar ist.

In einer ersten Ausführungsform der Schürze nach Anspruch 2 ist das Aufnahmemaul als Aufnahmeschlitz ausgebildet, wobei an den beiden äußeren Enden der Schürze vertikale Verbindungsbereiche bestehen, so daß die Schürze einteilig ausgeführt ist. Aus Gründen der Stabilität und der besseren Führung für die Stoßstange beim Eintauchen in das Aufnahmemaul ist es zweckmäßig, untere und obere horizontal verlaufende Wandbereiche vorzusehen, wobei die Rückseite des Aufnahmemauls zur Karosserie hin offen sein kann.

In einer anderen Ausführungsform nach Anspruch 3 ist auch die Rückseite des Aufnahmemauls durch eine Rückwand abgeschlossen, so daß sich eine taschenartige Ausbildung ergibt. Durch Steganordnungen können auch teilweise geschlossene und offene Bereiche realisiert werden.

Nach Anspruch 4 wird zweckmäßig der obere Randbereich der Schürze als Abdeckleiste für den Stoßfänger bzw. als Übergangs- und Anschlußteil zur Karosserie hin geformt.

Die Schürze kann nach Anspruch 5 im unteren Bereich zusätzlich als Spoiler geformt sein, wodurch die Schürze als einheitliches Bauteil eine weitere Funktion übernimmt.

Eine vorteilhafte Ausführung wird mit den Merkmalen des Anspruchs 6 erhalten, indem die Haltenasen am Stoßfängerüberzug angeformt sind. Die Lage der Haltenasen ist dabei am offenen Ende des U-förmigen Profils, wobei die Haltenasen den Stoßfängerträger von unten und oben her umfassen. Grundsätzlich wäre es auch möglich, Haltenasen oder Nasenlängsbereiche am Stoßfängerträger vorzusehen, die in vertikaler Richtung abstehen und in Aussparungen des Stoßfängerüberzugs eingreifen. Dies ist aber wegen dann erforderlicher Ausnehmungen im Stoßfängerüberzug weniger geeignet.

Die bisher dargestellten Befestigungsmerkmale tragen im wesentlichen dazu bei, den Stoßfängerüberzug zu halten und mit dem Stoßfängerträger dauerhaft zu verbinden. Wie eingangs erwähnt, soll aber diese Verbindung wegen der unterschiedlichen Temperaturausdehnungen des Stoßfängerträgers und des Stoßfängerüberzugs verschiebbar sein. Um dabei aber den Stoßfängerüberzug in Horizontalrichtung gesehen zu fixieren, wird mit Anspruch 7 vorgeschlagen, den Stoßfängerüberzug mit einer in seinem mittleren Bereich angeformten Zunge in eine entsprechende Ausnehmung im Stoßfängerträger einzusetzen. Damit wird erreicht, daß der mittlere Teil des Stoßfängerüberzugs fest und unverrückbar mit dem Stoßfängerträger verbunden ist. Die seitlichen Bereiche des Stoßfängerüberzugs können sich dagegen entsprechend ihrer Temperaturausdehnung weitgehend frei verschieben, wozu auch in den Klippverbindungen die Haltenasen seitlich Verschiebemöglichkeiten an den Stoßfängerträgern aufweisen. Der Stoßfängerüberzug verzieht sich daher nicht.

Nach Anspruch 8 wird vorgeschlagen, für den Stoßfängerträger ein an sich bekanntes Aluminium-Strangpreßprofil vorzusehen.

Weiter soll nach Anspruch 9 die Abstützung des Stoßfängerträgers an der Karosserie durch an sich bekannte Pralldämpferanordnungen erfolgen.

Anhand eines Ausführungsbeispiels wird die Erfindung mit weiteren Einzelheiten, Merkmalen und Vorteilen näher erläutert.

Die einzige Fig. zeigt einen Querschnitt in Fahrzeuglängsrichtung im mittleren Bereich einer Stoßfängeranordnung an einem Kraftfahrzeug.

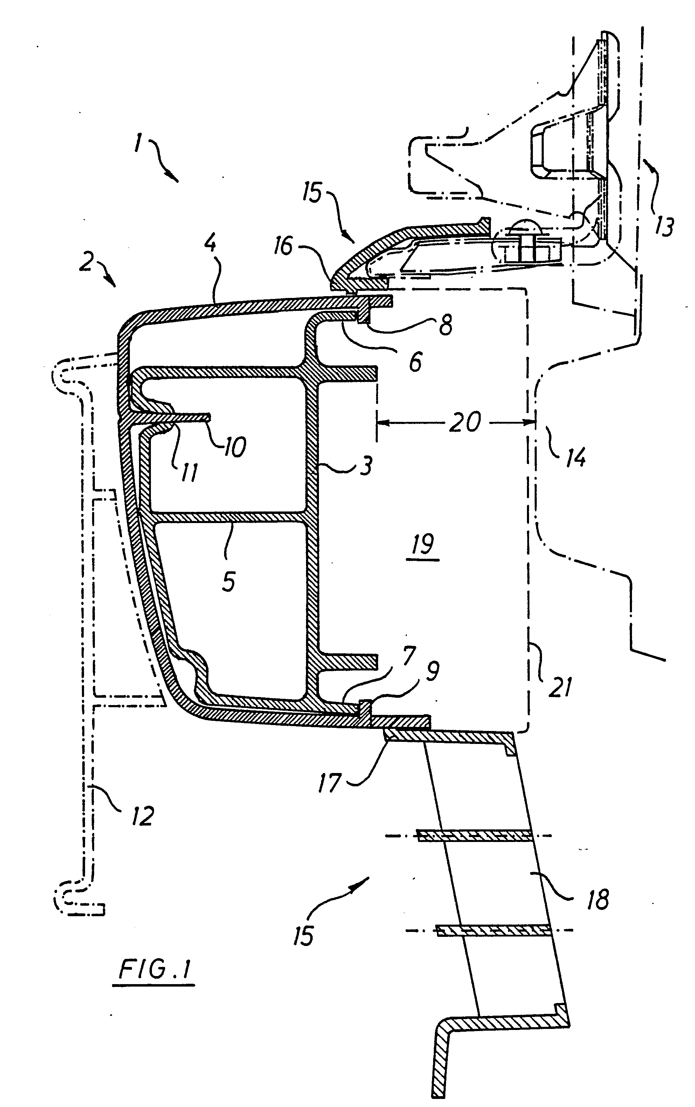

In Fig. 1 ist eine Stoßfängeranordnung 1 dargestellt mit einem Stoßfänger 2, der aus einem Aluminium-Strangpreßprofil als Stoßfängerträger 3 und einem Stoßfängerüberzug 4 aus festem Kunststoff besteht.

Der Stoßfängerträger 3 ist ein kastenförmiges Profil mit einer Querwand 5, an dem zur Karosserie hin ein oberer Abstützrand 6 und unterer Abstützrand 7 angeformt sind.

Der Stoßfängerüberzug 4 weist im Querschnitt ein U-förmiges Profil auf. Im Endbereich der U-Schenkel sind Haltenasen 8 und 9 angeformt, die auch als längs verlaufende Halteleisten ausgeführt sein können. Diese Haltenasen 8, 9 greifen über die Enden der Abstützränder 6 und 7. Wegen der Elastizität des für den Stoßfängerüberzug 4 verwendeten festen Kunststoffmaterials wirken die beiden U-Schenkel wie eine Klammer, so daß mit Hilfe der Haltenasen 8 und 9 eine Klippverbindung zwischen dem Stoßfängerträger 3 und dem Stoßfängerüberzug 4 geschaffen ist und beide Teile zusammenhalten.

Im mittleren Bereich (über die Länge gesehen) des Stoßfängerüberzugs 4 ist eine Zunge 10 angeformt, die in einer entsprechenden Ausnehmung 11 im Stoßfängerträger 3 von vorne her eingesteckt ist. Beim Aufstecken des U-förmigen Profils des Stoßfängerüberzugs 4 auf den Stoßfängerträger 3 wird somit auch die Zunge 10 in die Ausnehmung 11 eingesteckt. Dadurch wird der Stoßfängerüberzug in der Mitte des Stoßfängerträgers fixiert, wobei sich die beiden Seitenbereiche gegenüber dem Stoßfängerträger bei einer Temperaturausdehnung noch etwas verschieben können.

Strichliert ist ein Kennzeichenträger 12 angedeutet, der mit dem Stoßfängerüberzug 4 verbunden werden kann.

Der Verlauf der Karosseriebleche ist mit den strichlierten Linien 13 angedeutet. Dabei ist ein Querträger 14 zu erkennen, durch den der geringste Abstand 20 zwischen dem Stoßfänger 2 bzw. Stoßfängerträger 3 und der Karosserie bestimmt ist.

Mit der Karosserie fest verbunden ist eine Schürze 15, deren oberer Randbereich 16 und unterer Randbereich 17 dargestellt ist. Am unteren Randbereich 17 ist weiter ein Spoiler 18 ange formt. Die Schürze 15 ist ein einstückiges Teil mit (nicht dargestellten) Verbindungen in den Seitenbereichen. Dadurch ist ein schlitzförmiges Aufnahmemaul 19 geschaffen, in das gerade der Stoßfänger 3 mit den Außenabmessungen des Stoßfängerüberzugs 4 hineinpaßt. In der dargestellten, für den Stoßfänger 2 unbelasteten Anordnung liegt der obere Randbereich 16 und untere Randbereich 17 der Schürze 15 an den äußeren Endbereichen des U-Profils des Stoßfängerüberzugs 4 an. Dadurch werden die Haltenasen 8 und 9 zur Stoßfängerinnenseite hin gehalten, so daß die Klippverbindung gesichert ist, da das U-Profil nicht mehr aufgeweitet werden kann.

Die dargestellte Stoßstangenanordnung hat folgende Funktion:

Bei der Montage wird zuerst der Stoßfängerüberzug 4 auf den Stoßfängerträger 3 gesteckt, wodurch diese beiden Teile als Einheit vormontiert sind. Nachdem die Schürze 15 an der Karosserie montiert ist, wird der vormontierte Stoßfänger 2 in das Aufnahmemaul 19 eingesetzt und an den (nicht dargestellten) Pralldämpfern montiert.

Die Schürze 15 sichert die Klippverbindungen mit den Haltenasen 8 und 9. Durch den oberen Randbereich 16 der Schürze 15 wird der Anschluß an die Karosserie hergestellt. In der horizontalen Richtung wird der Stoßfängerüberzug 4 durch die Zunge 10 festgelegt, wobei sich die Seitenbereiche unabhängig vom Stoßfängerträger ausdehnen können.

Bei einer Belastung des Stoßfängers 2 wird dieser in Richtung auf die Karosserie gedrängt, wobei er über den gesamten Abstand 20 verschoben werden kann, ohne die Karosserie zu beschädigen.

In der dargestellten Schürzenausführung ist das Aufnahmemaul 19 nach hinten zur Karosserie hin offen. Es kann jedoch auch eine taschenartige Ausführung mit einer Rückwand oder mit Stegen entsprechend der strichlierten Linie 21 vorgesehen sein.

Zusammenfassend wird festgestellt, daß mit der Erfindung eine funktionelle, aus wenig Teilen bestehende, kostengünstige und einfach montierbare Stoßfängeranordnung zur Verfügung gestellt wird.

## Ansprüche

1. Stoßfängeranordnung an einem Kraftfahrzeug
mit einem Stoßfänger, der aus einem Stoßfängerträger, der über Stützen mit der Karosserie verbunden ist und
aus einem Stoßfängerüberzug aus festem Kunststoff, mit dem der Stoßfängerträger zumindest teilweise überzogen ist, besteht,
dadurch gekennzeichnet,
daß mit der Karosserie eine Schürze (15) verbunden ist, die mit einem zur Karosserieaußenseite hin offenen Aufnahmemaul (19) ausgebildet ist,
daß in der Schürze (15) bzw. dem Aufnahmemaul (19) der Stoßfänger (2) angeordnet ist, wobei die Maultiefe bzw. der Abstand (20) zu festen Karosserieteilen (Querträger 14) wenigstens so groß ist, daß der Stoßfänger (2) innerhalb der Maultiefe (19) bei Belastungen elastische Durchbiegungen und Verschiebungen frei durchführen kann,
daß der Stoßfängerüberzug (4) U-förmig ausgebildet und über den Stoßfängerträger (3) gesteckt ist und Haltenasen (8, 9) vorgesehen sind, die in vertikaler Richtung eingreifen und Klippverbindungen bilden, und
daß die Maulweite des Aufnahmemauls (19) so eng ausgeführt ist, daß Schlitze zwischen den Randbereichen (16, 17) des Aufnahmemauls (19) und dem Stoßfängerüberzug (4) schmäler als die Höhe der Haltenasen (8, 9) sind, so daß die Klippverbindungen gegen ein Lösen gesichert sind.

2. Stoßfängeranordnung nach Anspruch 1, dadurch gekennzeichnet, daß die Schürze (15) an ihren beiden äußeren Seiten vertikale Verbindungsbereiche aufweist und im dazwischenliegenden Bereich das Aufnahmemaul (19) als Aufnahmeschlitz ausgebildet ist.

3. Stoßfängeranordnung nach Anspruch 1, dadurch gekennzeichnet, daß das Aufnahmemaul (19) ganz oder durch Steganordnungen teilweise zur Karosserie hin taschenartig geschlossen ist.

4. Stoßfängeranordnung nach einem der Ansprüche 1 bis 3, dadurch gekennzeichnet, daß die Schürze (15) im oberen Randbereich (16) als obere Abdeckleiste für den Stoßfänger und Anschlußleiste an die Karosserie geformt ist.

5. Stoßfängeranordnung nach einem der Ansprüche 1 bis 4, dadurch gekennzeichnet, daß die Schürze (15) im unteren Bereich als Spoiler (18) geformt ist.

6. Stoßfängeranordnung nach einem der Ansprüche 1 bis 5, dadurch gekennzeichnet, daß die Haltenasen (8, 9) am Stoßfängerüberzug (4) gebildet sind und im Öffnungsbereich, d.h. an den offenen Enden des U-förmigen Profils nach Innen weisend angeordnet sind und den Stoßfängerträger (3) beidseitig umfassen.

7. Stoßfängeranordnung nach einem der Ansprüche 1 bis 6, dadurch gekennzeichnet, daß der Stoßfängerüberzug (4) mit einer in seinem mittleren Bereich angeformten Zunge (10) in eine entsprechende Ausnehmung (11) im Stoßfängerträger (3) eingreift und dadurch in horizontaler Richtung gehalten ist

8. Stoßfängeranordnung nach einem der Ansprüche 1 bis 7, dadurch gekennzeichnet, daß der Stoßfängerträger (3) ein Aluminium-Strangpreßprofil ist.

9. Stoßfängeranordnung nach einem der Ansprüche 1 bis 8, dadurch gekennzeichnet, daß die Stützen für den Stoßfängerträger (3) Pralldämpferanordnungen sind.

FIG.1